# FASCICULE DE BREVET EUROPEEN

(11) **EP 1 368 686 B1**
(45) Date de publication et mention de la délivrance du brevet: **11.04.2007**
(21) Numéro de dépôt: 02706848.5
(22) Date de dépôt: 12.02.2002
(51) Int. Cl.: G02B 6/44

(54) **DISPOSITIF D'OUVERTURE DE CABLE A FIBRES OPTIQUES**
VORRICHTUNG ZUR ÖFFNUNG FASEROPTISCHER KABEL
OPTICAL FIBER CABLE OPENING DEVICE

(30) Priorité: 14.03.2001 FR 0103492
(43) Date de publication de la demande: 10.12.2003
(73) Titulaire: Silec Cable, 77130 Montereau Fault Yonne (FR)
(72) Inventeur: DELPECH, Maurice, F-46340 Salviac (FR); GRELIN, Etienne, F-89340 Villeblevin (FR)
(74) Mandataire: Cabinet Martinet & Lapoux
(86) Numéro de dépôt international: PCT/FR2002/000533
(87) Numéro de publication internationale: WO 2002/073279

(56) Documents cités:
- EP-A- 0 195 932
- FR-A- 2 776 395

## Description

La présente invention concerne un dispositif pour ouvrir la gaine d'un câble à fibres optiques qui est généralement composé de plusieurs couches formant des enveloppes ou tubes d'épaisseurs différentes et en matières différentes.

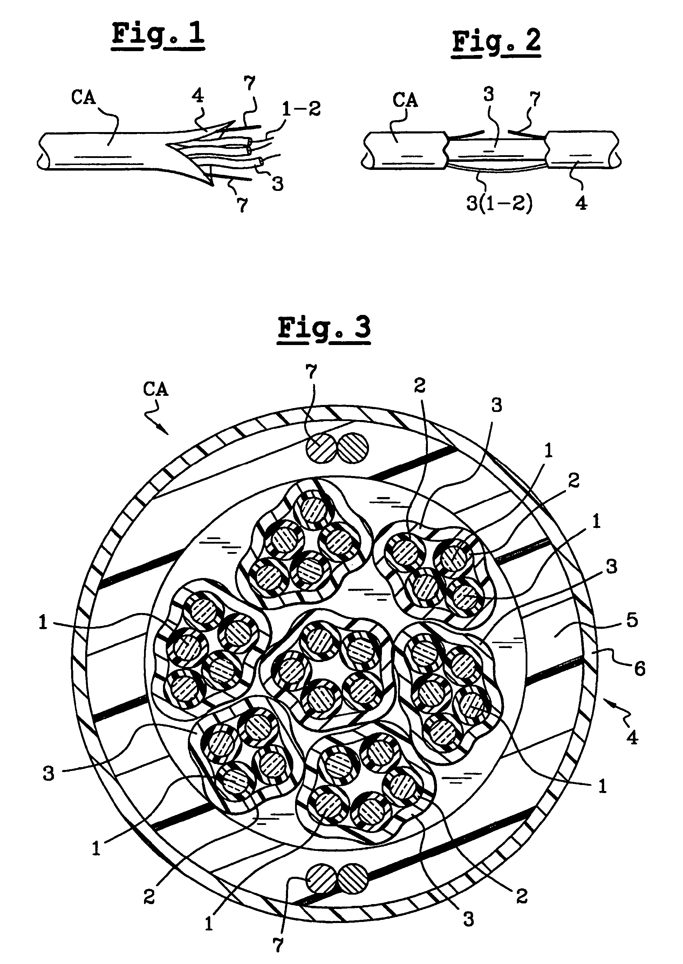

Le dispositif d'ouverture sert à réaliser deux coupes diamétralement opposées à l'extrémité du câble CA, comme montré à la figure 1, afin d'épanouir les extrémités des fibres optiques 1-2 contenues dans le câble et les raccorder aux extrémités de fibres optiques d'un autre câble dans un dispositif de raccordement, ou à des extrémités de fibres de liaison dans un répartiteur de fibres optiques. Selon une autre utilisation montrée à la figure 2, pour réaliser un piquage de quelques fibres optiques 1-2 dans le câble, les deux coupes diamétralement opposées sont pratiquées en pleine longueur du câble CA.

En particulier, l'invention a trait à l'ouverture d'un câble à fibres optiques CA tel que décrit dans la demande de brevet français FR 2736730 en combinaison avec la demande de brevet européen EP 0468878.

Comme montré à la figure 3, le câble CA comporte des fibres optiques avec une âme 1 revêtue d'une couche d'identification colorée 2 et divisées en des modules qui, dans l'exemple illustré, comprennent chacun quatre à cinq fibres optiques 1-2, bien qu'en pratique, chaque module contient typiquement 12 fibres optiques. Le câble peut contenir par exemple 12 à 84 modules. Chaque module est enveloppé d'une microgaine de maintien 3 de faible épaisseur, facilement déchirable. Les gaines de maintien 3 assurent ainsi une cohésion des modules afin de constituer des modules compacts, et sont en contact avec les fibres optiques 1-2 pour enserrer celles-ci sans découplage des fibres optiques.

L'ensemble des modules 3 est recouvert par une gaine composite 4 qui est composée d'une enveloppe interne de préférence extrudée 5 en contact avec les gaines de maintien 3 et d'une enveloppe externe 6 assurant la présentation finale du câble CA.

Dans la gaine de câble 4, typiquement dans l'enveloppe interne 5 plus épaisse que l'enveloppe externe 6, sont noyés deux groupes diamétralement opposés de plusieurs organes de renfort 7. Typiquement chaque groupe est une paire d'organes de renfort 7. Chaque organe de renfort 7 est par exemple un fil métallique ou une mèche de fibres de verre ou d'aramide rigidifiée par une résine. Dans chaque paire, les deux organes de renfort 7 sont tangents l'un à l'autre et s'étendent longitudinalement au câble CA.

Actuellement, il existe principalement deux procédés pour ouvrir un tel câble à fibres optiques.

Le premier procédé consiste à raboter l'épaisseur de la gaine de câble 4 au-dessus des deux groupes d'organes de renfort 7 sur la longueur d'ouverture souhaitée. Puis les organes de renfort 7 sont sortis à travers les tronçons rabotés de la gaine 4 et sont coupés radialement avec la gaine à l'aide d'un outil à profondeur de coupe limitée. Ensuite la gaine est déchirée en deux parties en utilisant l'empreinte des organes de renfort comme amorce. Finalement à l'aide d'une pince d'électricien, les surplus de la gaine 4 et des organes de renfort 7 sont coupés.

Selon le deuxième procédé, deux découpes diamétralement opposées sont réalisées de part et d'autre des organes de renfort 7 du câble CA, sur la longueur d'ouverture souhaitée. Les deux groupes d'organes de renfort sont dégagés sur une longueur nécessaire à leur ancrage. Puis à l'aide d'une pince d'électricien, les surplus de la gaine 4 et des organes de renfort 7 sont coupés.

Le deuxième procédé engendre beaucoup moins de déchets et copeaux que le premier procédé par rabotage.

Le dispositif d'ouverture selon l'invention met en oeuvre un procédé d'usinage appartenant à la catégorie du deuxième procédé ci-dessus selon lequel la gaine composite 4 du câble CA subit deux découpes diamétralement opposées.

Relativement au deuxième procédé, la demande de brevet FR 2776395 divulgue un dispositif de découpe de gaine de câble de fibres optiques comprenant deux outils d'usinage placés respectivement sur des supports de manière symétrique par rapport à l'axe du câble et comportant chacun un moyen de réglage individuel à molette et tige filetée pour régler la pénétration de l'outil respectif indépendamment de la pénétration de l'autre outil dans la gaine du câble. Le dispositif de découpe comprend également deux paires de guides en forme de diabolos amovibles, situées de part et d'autre de l'ensemble des outils d'usinage, le long du câble. Ces deux paires de guides enserrent le câble afin de guider avec précision et sans effort le dispositif de découpe sur la longueur d'ouverture souhaitée du câble lors des quelques passages des outils pour découper progressivement la gaine du câble.

Les deux outils d'usinage avec leurs moyens de réglage indépendants et les guides dans chacune des deux paires sont partagés en deux ensembles montés de part et d'autre du câble sur les deux supports qui peuvent être déplacés en sens opposés de manière symétrique par rapport à l'axe du câble au moyen d'une molette centrale difficilement saisissable.

Par conséquent la pression exercée par les paires de guides sur la gaine du câble dépend du rapprochement des deux supports et engendre nécessairement un rapprochement des deux outils d'usinage. Lors de l'ouverture du câble, les outils d'usinage forment par rabotage des copeaux qui risquent de se coincer et former des bourrages. En outre, le rabotage nécessite un effort physique conséquent et une grande dextérité de l'opérateur.

La profondeur d'usinage dépend du réglage de la pression entre les guides de chaque paire et doit être alors ajustée en actionnant individuellement les molettes des tiges filetées supportant les outils. Il n'y a aucune limitation de profondeur de coupe, ce qui est dangereux pour les éléments, tels que fibres optiques, logés à l'intérieur de la gaine.

L'invention a pour objectif de fournir un dispositif d'ouverture de gaine de câble à fibres optiques dans lequel le réglage de la profondeur de coupe est indépendant du réglage/guidage du câble et dans lequel la coupe comme le guidage est parfaitement symétrique par rapport à l'axe du câble.

Pour atteindre cet objectif, on utilise le dispositif selon l'invention qui est défini à la revendication 1.

Le réglage de la profondeur de coupe par le premier moyen est ainsi indépendant du réglage de la force de serrage entre les guides dans les deuxièmes moyens, bien que le câble soit ouvert le long de deux génératrices grâce à l'avance symétrique des outils de coupe. Le dispositif de l'invention s'adapte ainsi à toutes les épaisseurs connues de gaine de câble à fibres optiques.

De préférence, chacun des premier et deuxièmes moyens pour déplacer comprend une vis motrice immobile en translation ayant deux filetages en sens contraires, et deux écrous glissant dans des rainures de guidage de la semelle et respectivement montés sur les filetages et supportant chacun un outil de coupe ou un guide.

D'autres caractéristiques et avantages de la présente invention apparaîtront plus clairement à la lecture de la description suivante de plusieurs réalisations préférées de l'invention en référence aux dessins annexés correspondants dans lesquels:
- la figure 1 est une vue en perspective schématique d'une extrémité de câble dégainée ;
- la figure 2 est une vue en perspective schématique d'un tronçon de câble partiellement découpé pour réaliser un piquage de fibres optiques ;
- la figure 3 est une vue en coupe d'un câble connu à modules de fibres optiques, déjà décrit ;
- la figure 4 est une vue de dessus du dispositif d'ouverture de gaine de câble selon l'invention ;
- la figure 5 est une vue de face d'un dispositif de coupe central inclus dans le dispositif d'ouverture selon l'invention ; et
- la figure 6 est une vue de face de l'un des deux dispositifs de guidage de câble inclus dans le dispositif d'ouverture selon l'invention.

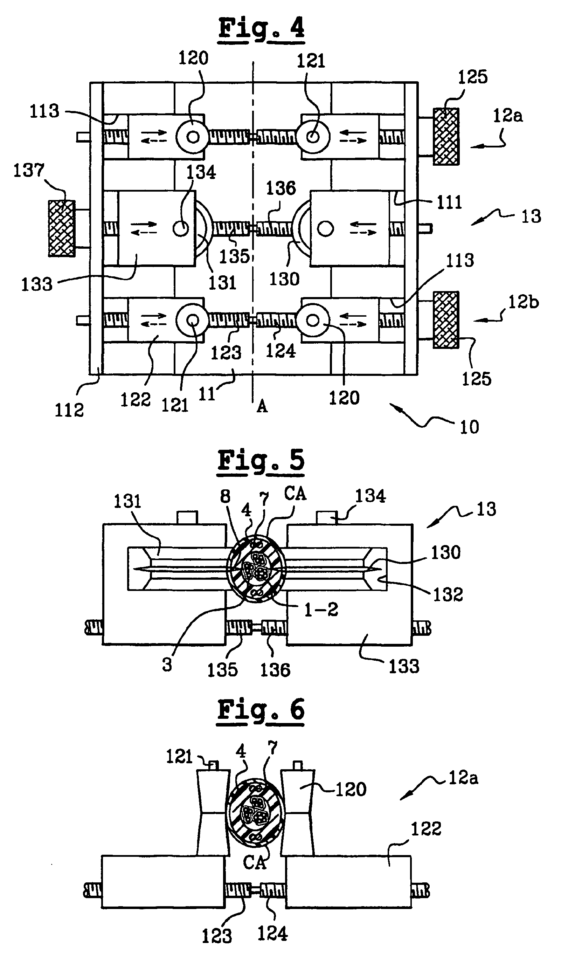

Comme montré à la figure 4, le dispositif d'ouverture de gaine de câble à fibres optiques 10 comprend essentiellement une semelle 11, et successivement un premier dispositif de guidage 12a, un dispositif de coupe central 13 et un deuxième dispositif de guidage 12b qui sont supportés par la semelle. Les dispositifs 12a, 13 et 12b sont symétriques par rapport à un plan de symétrie du dispositif 10 perpendiculaire à la semelle et contenant un axe de positionnement de câble AA.

Comme montré également à la figure 5, le dispositif de coupe 13 comprend deux outils de coupe sous la forme de deux disques minces tranchants 130. Chaque disque tranchant 130 est logé dans une gorge diamétrale centrale d'une roue 131 à profil longitudinal sensiblement en vé épointé afin de contribuer également au guidage du câble CA sensiblement en fin de coupe, le câble CA étant celui déjà décrit selon la figure 1.

Chaque roue 131 supportant l'un des disques tranchants 130 est placée dans une entaille 132 d'un coulisseau parallélépipédique 133 et est montée à rotation libre autour d'un axe 134 fixé dans le coulisseau. Les axes de rotation 134 des roues 131 sont parallèles et situés dans un plan perpendiculaire à l'axe du câble confondu avec l'axe de positionnement AA précité. Les disques tranchants tournent ainsi librement en sens opposés dans un plan diamétral au câble lorsque le dispositif d'ouverture 10 est déplacé le long du câble. La partie tranchante du disque est dimensionnée pour obtenir une profondeur de coupe calibrée.

Les deux coulisseaux 133 avec leurs entailles 132 en vis-à-vis sont montés comme des écrous glissant dans deux rainures transversales alignées centrales 111 qui sont ménagées sur la semelle 11 perpendiculairement à l'axe AA. Pour déplacer simultanément en sens opposés les coulisseaux 133 supportant les disques tranchants fous 130, les coulisseaux 133 sont respectivement vissés sur des filetages 135 et 136 de sens contraires et de même pas d'une vis motrice. Les extrémités de la vis motrice 135-136 sont immobilisées en translation au niveau de languettes 112 parallèles à l'axe AA et saillantes aux extrémités transversales de la semelle 11. L'une des extrémités de la vis 135-136 par exemple à gauche dans la figure 4, comporte une tête cylindrique moletée 137 pour tourner la vis 135-136.

Les deux coulisseaux 133 vissés sur les deux filetages de sens contraire 135 et 136 de la vis glissent ainsi en sens contraires dans les rainures 111 qui les immobilisent en rotation lorsque la vis 135-136 est tournée. Lors du montage, les coulisseaux 133 sont placés pour qu'ils soient équidistants de l'axe AA afin qu'une rotation dans un sens de la tête de préhension 137 de la vis 135-136 engendre un rapprochement des coulisseaux 133 et par conséquent un rapprochement symétrique des disques tranchants 130, et une rotation de la tête 137 selon le sens inverse engendre un éloignement des coulisseaux et donc des disques tranchants. La vis 135-136 permet ainsi de régler la profondeur de coupe des disques tranchants dans la gaine 4 du câble CA, lesquels disques sont situés dans un plan diamétral sensiblement perpendiculaire au plan diamétral de symétrie des groupes d'organes de renfort 7, comme montré à la figure 5. Une graduation micrométrique sous la tête de vis 137, fonction du pas des filetages 135 et 136 pour un tour, facilite le réglage précis de la pénétration des disques tranchants 130 dans la gaine.

Par exemple des profondeurs de pénétration successives de 0,5 à 0,6 millimètres chacune pour plusieurs translations aller-retour du dispositif 10 sur la longueur d'ouverture souhaitée de la gaine 4 du câble CA permet d'obtenir deux sillons diamétralement opposés dans la gaine 4 le long du câble.

Les dispositifs de guidage 12a et 12b sont disposés symétriquement par rapport à l'axe de la vis 135-136 du dispositif de coupe 13 et sont identiques. L'un 12a est décrit en détail ci-après en référence aux figures 4 et 6.

Le dispositif de guidage 12a comprend deux guides disposés symétriquement par rapport à l'axe de positionnement de câble AA. Les guides sont sous la forme de galets tournants 120. Chaque galet 120 a la forme de deux troncs de cône ayant des petites bases communes, comme sensiblement la bobine d'un diabolo, et est monté à rotation libre autour d'un axe 121 fixé sur le sommet d'un petit coulisseau 122. Les axes 121 des galets 120 sont parallèles et alignés suivant un plan perpendiculaire à l'axe de positionnement AA du câble CA et à la semelle 11.

Comme les coulisseaux 133, les coulisseaux 122 sont montés glissants dans deux rainures transversales alignées latérales 112 qui sont ménagées sur la semelle 11 perpendiculairement à l'axe AA. Une vis motrice à deux filetages 123 et 124 de sens contraires et de même pas est également prévue pour déplacer simultanément en sens opposés les coulisseaux 122 et par conséquent les galets 120 de part et d'autre de l'axe de positionnement de câble AA. Les coulisseaux 122 sont montés comme des écrous respectivement sur les deux filetages de sens contraires 123 et 124 afin que les galets 120 soient toujours équidistants de l'axe de positionnement de câble AA. Les extrémités de la vis 123-124 sont également immobilisées en translation par les languettes de semelle 112.

La vis 123-124 comprend également une tête cylindrique moletée 125 avec graduation pour tourner la vis et ainsi rapprocher ou éloigner les galets 120. De préférence les têtes de préhension 125 des vis 123-124 dans les dispositifs de guidage 12a et 12b sont situées à l'extérieur de la semelle 11, du côté de l'une des languettes 112, tandis que la tête de préhension 137 de la vis centrale 135-136 dans le dispositif de coupe 13 est située à l'extérieur de la semelle 11, du côté de l'autre languette 112. La disposition relative des têtes 125 et 137 évite une confusion entre le positionnement des disques tranchants 130 et les positionnements des paires de galets de guidage 120 et rend plus compact le dispositif d'ouverture 10.

Dans chaque dispositif de guidage 12a, les galets 120 sont rapprochés afin de maintenir le câble CA entre les creux des galets 120 sans compresser la gaine composite 4 de manière à éviter toute ovalisation de celle-ci, comme montré à la figure 6. Grâce aux petites bases des troncs de cône formant les galets de guidage 120, disposées dans le plan des disques tranchants 130 contenant l'axe de positionnement de câble AA, le câble CA est parfaitement maintenu rectiligne entre les dispositifs de guidage 12a et 12b et la pénétration des disques tranchants diamétralement opposés 130 dans la gaine 4 peut être réglée précisément à chaque passage du dispositif de coupe 10, indépendamment du serrage par les galets 120, sans déformation du câble. Puis les deux groupes d'organes de renfort 7 sont dégagés, et les surplus de ces organes de renfort dégagés ainsi que de la gaine 4 sont coupés à l'aide d'une pince d'électricien. Par exemple deux à trois passages sont nécessaires pour chaque profondeur de coupe sur une longueur d'ouverture de trois mètres environ.

## Revendications

1. - Dispositif pour ouvrir la gaine (4) d'un câble à fibres optiques (CA), comprenant successivement le long d'un axe de positionnement (AA) du câble (CA), une paire de guides tournants (120) chacun placé de part et d'autre de l'axe (AA) de positionnement du câble (CA), deux outils de coupe (130) chacun placé de part et d'autre de l'axe (AA) de positionnement du câble (CA) et diamétralement opposés par rapport au câble (CA) et une autre paire de guides tournants (120) chacun placé de part et d'autre de l'axe (AA) de positionnement du câble (CA), **caractérisé en ce qu'**il comprend une semelle (11) de support, un premier moyen (13) fixé sur la semelle arrangé pour déplacer simultanément en sens opposés les outils de coupe (130) perpendiculairement à l'axe de positionnement (AA), et deux deuxièmes moyens (12a, 12b) fixés sur la semelle arrangés pour déplacer indépendamment du premier moyen (13) et simultanément en sens opposés respectivement les guides de chaque paire perpendiculairement à l'axe de positionnement (AA).

2. - Dispositif conforme à la revendication 1, dans lequel chacun des premier et deuxièmes moyens pour déplacer comprend une vis motrice (135-136 ; 123-124) immobile en translation ayant deux filetages en sens contraires, et deux écrous (133 ; 122) glissant dans des rainures de guidage (111 ; 113) de la semelle (11) et respectivement montés sur les filetages et supportant chacun un outil de coupe (130) ou un guide (120).

3. - Dispositif conforme à la revendication 2, dans lequel la vis (135-136 ; 123-124) comporte une tête de préhension (137 ; 125) à l'extérieur de la semelle (11).

4. - Dispositif conforme à la revendication 2, dans lequel la vis (135-136) du premier moyen pour déplacer les outils de coupe comporte une tête de préhension (137) située à l'extérieur d'un côté (112) de la semelle opposé à un autre côté (112) de la semelle à l'extérieur duquel des têtes de préhension (125) des vis (123-124) des deuxièmes moyens pour déplacer les guides de câble sont disposées.

5. - Dispositif conforme à l'une quelconque des revendications 1 à 4, dans lequel les outils de coupe sont des disques tranchants (130) qui sont montés autour d'axes parallèles (134) pour tourner librement dans un plan diamétral au câble (CA).

6. - Dispositif conforme à la revendication 5, dans lequel chaque disque tranchant (130) est logé centralement dans une roue (131) à profil sensiblement en vé épointé, montée à rotation libre autour de l'un des axes parallèles (134).

7. - Dispositif conforme à l'une quelconque des revendications 1 à 6, comprenant en outre un câble à fibre optique (CA) dont la gaine (4) du câble (CA) contient deux groupes d'organes de renfort (7) diamétralement opposés, le câble étant positionné afin que les outils de coupe (130) soient situés dans un plan diamétral du câble sensiblement perpendiculaire à un plan diamétral de symétrie des groupes d'organes de renfort (7).

## Claims

1. Device for opening the jacket (4) of an optical fibre cable (CA), comprising in succession along a positioning axis (AA) of the cable (CA), a pair of rotating guides (120) each placed either side of the positioning axis (AA) of the cable (CA), two cutting tools (130) each placed either side of the positioning axis (AA) of the cable (CA) and diametrically opposed with respect to the cable (A) and another pair of rotating guides (120) each placed either side of the positioning axis (AA) of the cable (CA), **characterized in that** it comprises a support plate (11), a first means (13) fixed on the plate arranged to simultaneously move the cutting tools (130) in opposing directions at right angles to the positioning axis (AA), and two second means (12a, 12b) fixed to the plate arranged to move independently of the first means (13) and simultaneously in opposite directions respectively the guides of each pair at right angles to the positioning axis (AA).

2. Device according to Claim 1, in which each of the first and second means for moving comprises a drive screw (135-136; 123-124) that is translationally immobile, having two opposing threads, and two nuts (133; 122) sliding in guide grooves (111; 113) of the plate (11) and respectively fitted on the threads and each supporting a cutting tool (130) or a guide (120).

3. Device according to Claim 2, in which the screw (135-136; 123-124) comprises a gripping head (137; 125) outside of the plate (11).

4. Device according to Claim 2, in which the screw (135-136) of the first means for moving the cutting tools comprises a gripping head (137) located outside of one side (112) of the plate opposite to another side (112) of the plate, outside of which gripping heads (125) of the screws (123-124) of the second means for moving the cable guides are positioned.

5. Device according to any one of Claims 1 to 4, in which the cutting tools are slicing discs (130) that are fitted about parallel axes (134) to freely rotate in a plane diametrical to the cable (CA).

6. Device according to Claim 5, in which each slicing disc (130) is centrally housed in a wheel (131) with a roughly flattened-V profile, fitted to freely rotate about one of the parallel axes (134).

7. Device according to any one of Claims 1 to 6, also comprising a fibre optic cable (CA) of which the jacket (4) of the cable (CA) contains two groups of diametrically opposing strength members (7), the cable being positioned so that the cutting tools (130) are located in a diametrical plane of the cable roughly perpendicular to a diametrical plane of symmetry of the groups of strength members (7).

## Patentansprüche

1. - Vorrichtung zum Auftrennen der Ummantelung (4) eines faseroptischen Kabels (CA), in der Verlegeachse (AA) des Kabels (CA) nacheinander bestehend aus einem Paar Drehführungen (120), jeweils auf der einen und der anderen Seite der Verlegeachse (AA) des Kabels (CA) angeordnet, zwei Schneidwerkzeugen (130), die dem Kabel (CA) diametral gegenüberliegen, und einem weiteren Paar Drehführungen (120), jeweils auf der einen und der anderen Seite der Verlegeachse (AA) des Kabels (CA) angeordnet, **dadurch gekennzeichnet, dass** sie eine Trägerplatte (11), ein erstes Mittel (13), das auf der Trägerplatte befestigt ist und dazu dient, die Schneidwerkzeuge (130) gleichzeitig in entgegensetzten Richtungen senkrecht zur Verlegeachse (AA) zu verschieben, und zwei zweiten Mitteln (12a, 12b), die auf der Trägerplatte befestigt sind und dazu dienen, unabhängig vom ersten Mittel (13) gleichzeitig in entgegengesetzten Richtungen die zu jedem Paar gehörenden Führungen jeweils senkrecht zur Verlegeachse (AA) zu verschieben.

2. - Vorrichtung nach Anspruch 1, bei der jedes der ersten und zweiten Mittel zum Verschieben eine in Querrichtung starre Antriebsschraube (135-136; 123-124) mit zwei gegenläufigen Gewinden und zwei Muttern (133; 122) umfasst, die in den Führungsrillen (111; 113) der Trägerplatte (11) gleiten und jeweils auf die Gewinde gesetzt sind und je ein Schnittwerkzeug (130) oder eine Führung (120) tragen.

3. - Vorrichtung nach Anspruch 2, bei der die Schraube (135-136; 123-124) außerhalb der Trägerplatte (11) einen Greifkopf (137; 125) umfasst.

4. - Vorrichtung nach Anspruch 2, bei der die Schraube (135-136) des ersten Mittels zum Verschieben der Schneidwerkzeuge einen Greifkopf (137) umfasst, angeordnet außerhalb der Trägerplatte auf einer Seite (112), die einer anderen Seite (112) der Trägerplatte gegenüberliegt, außerhalb derer die Greifköpfe (125) der Schrauben (123-124) der zweiten Mittel zum Verschieben der Kabelführungen angeordnet sind.

5. - Vorrichtung nach einem beliebigen der Ansprüche 1 bis 4, bei der die Schneidwerkzeuge Schneidscheiben (130) sind, die auf parallelen Achsen (134) montiert sind, um in einer Durchmesserebene zum Kabel (CA) frei drehen zu können.

6. - Vorrichtung nach Anspruch 5, bei der jede Schneidscheibe (130) mittig in einem Rad (131) mit Profil in Form eines stumpfen V untergebracht ist, das um eine der parallelen Achsen (134) frei drehend montiert ist.

7. - Vorrichtung nach einem beliebigen der Ansprüche 1 bis 6, zusätzlich ein faseroptisches Kabel (CA) umfassend, dessen Ummantelung (4) zwei Gruppen von sich diametral gegenüberliegenden Verstärkungselementen (7) einschließt, wobei das Kabel so positioniert ist, dass sich die Schneidwerkzeuge (130) in einer Durchmesserebene des Kabels befinden, die im Wesentlich senkrecht zur Symmetrie- und Durchmesserebene der Verstärkungselementgruppen (7) verläuft.
